# EUROPÄISCHE PATENTANMELDUNG

(11) **EP 4 475 397 A1**
(43) Veröffentlichungstag der Anmeldung: **11.12.2024**
(21) Anmeldenummer: 24180161.2
(22) Anmeldetag: 05.06.2024
(51) Int. Cl.: H02K 1/278, H02K 15/03

(54) **BÜRSTENLOSE ELEKTROMASCHINE UND VERFAHREN ZUR HERSTELLUNG EINER BÜRSTENLOSEN ELEKTROMASCHINE**

(30) Priorität: 07.06.2023 DE 102023205332
(71) Anmelder: Robert Bosch GmbH, 70442 Stuttgart (DE)
(72) Erfinder: Pagoni, Thomas, 70794 Filderstadt (DE); Mensak, Simon, 71634 Ludwigsburg (DE); Hokenmaier, Tobias, 73098 Rechberghausen (DE); Szalay, Peter, 72525 Muensingen (DE)

(57) **Zusammenfassung**

Die Erfindung betrifft eine bürstenlose Elektromaschine (10), insbesondere einen bürstenlosen Gleichstrommotor (12), mit einem Stator (14) und einem innerhalb des Stators (14) relativ dazu drehbeweglich angeordneten Rotor (18), wobei der Rotor (18) einen zylinderförmigen Grundkörper (20) aufweist, der drehfest mit einer Maschinenwelle (16) verbunden ist und auf seinem Außenumfang (22) eine Mehrzahl von Permanentmagneten (24) trägt und wobei der Stator (14) eine Statorwicklung (32) mit einer Mehrzahl von Einzelzahnwicklungen (28) zum Antrieb des Rotors (18) mittels eines elektrisch erzeugten Magnetdrehfelds aufweist. Es wird vorgeschlagen, dass die Permanentmagnete (24) des Rotors (18) mittels einer sie radial umgebenden, dünnwandigen Armierung (56) fixiert sind, wobei die Armierung (56) ein Elastizitätsmodul mit mindestens 150 GPa und/oder eine Streckgrenze von mindestens 600 MPa aufweist. Ferner betrifft die Erfindung ein Verfahren zur Herstellung der bürstenlosen Elektromaschine (10).

## Beschreibung

Die Erfindung betrifft eine bürstenlose Elektromaschine, insbesondere einen bürstenlosen Gleichstrommotor, mit einem Stator und einem innerhalb des Stators relativ dazu drehbeweglich angeordneten Rotor nach der Gattung des unabhängigen Anspruchs 1, wobei der Rotor einen zylinderförmigen Grundkörper aufweist, der drehfest mit einer Maschinenwelle verbunden ist und auf seinem Außenumfang eine Mehrzahl von Permanentmagneten trägt, und wobei der Stator eine Statorwicklung mit einer Mehrzahl von Einzelzahnwicklungen zum Antrieb des Rotors mittels eines elektrisch erzeugten Magnetdrehfelds aufweist.

### Stand der Technik

Unter einer bürstenlosen Elektromaschine soll insbesondere eine Elektromaschine mit einer statorseitigen Drehstromwicklung verstanden werden, die derart steuer- oder regelbar ist, dass ein drehendes Magnetfeld erzeugt wird, welches einen permanenterregten Rotor mitzieht. Alternativ ist auch denkbar, den Rotor im Zusammenhang mit einem Generator zu verwenden.

Rotoren für bürstenlose Elektromaschinen, insbesondere bürstenlose Gleichstrommaschinen - kurz BLDC- (brushless direct current) bzw. EC- (electronically commutated) Maschinen genannt - mit permanenterregten Magneten werden in der Regel in zwei unterschiedlichen Ausführungen hergestellt. Zum einen können die Permanentmagnete unterschiedlicher Polarität in so genannten Taschen eines zylinderförmigen Grundkörpers vergraben werden, zum anderen ist es möglich, die Magnete bzw. einen entsprechend im Wechsel polarisierten Magnetring von außen als Oberflächenmagnete auf den Grundkörper aufzubringen. Der Grundkörper besteht meistens aus einer Vielzahl von zu einem Rotorblechpaket gestapelter Rotorlaminationen, die jeweils aus einem weichmagnetischen Blech ausgestanzt wurden. Es sind aber auch andere Ausgestaltungen von Rotoren für Elektromaschinen, insbesondere für EC-Maschinen, denkbar. So kann der zylinderförmigen Grundkörper des Rotors beispielsweise aus Verbundwerkstoffen (Soft Magnetic Composites - SMC) aufgebaut sein. SMC-Werkstoffe bestehen aus hochreinem Eisenpulver mit einer speziellen Oberflächenbeschichtung auf jedem einzelnen Partikel. Diese elektrisch isolierende Oberfläche gewährleistet einen hohen elektrischen Widerstand auch nach dem Pressen und der Wärmebehandlung, was wiederum eine Minimierung bzw. ein Vermeiden von Wirbelstromverlusten nach sich zieht. SMC-Werkstoffe sind dem Fachmann bekannt, so dass hier nicht weiter auf deren Zusammensetzung eingegangen werden soll.

Die Permanentmagnete des Magnetrings bestehen insbesondere aus einem hartmagnetischen Material, beispielsweise einer Eisen-, Cobalt- oder Nickellegierung. Sind die Permanentmagnete als Oberflächenmagnete ausgebildet, so können sie entweder vor oder nach der Montage auf dem Rotor magnetisiert werden. Weiterhin sind kunststoffgebundene Dauermagnete denkbar, deren Magnetpulver in einer Matrix aus Kunststoffbinder eingebettet ist. Das Magnetpulver kann beispielsweise aus Hartferrit, SmCo- und/oder NdFeB bestehen oder als eine AlNiCo-Legierung ausgebildet sein. Vorzugsweise ist der Kunststoffbinder als ein thermoplastischer Binder ausgebildet, beispielsweise aus Polyamid oder aus Polyphenylsulfid. Alternativ ist auch denkbar, dass der Kunststoffbinder als ein duroplastischer Binder ausgebildet ist, beispielsweise als ein Epoxydharz.

Oberflächenmagnete haben neben ihren zahlreichen Vorteilen gegenüber den vergrabenen Magneten den Nachteil einer geringeren mechanischen Festigkeit gegenüber Fliehkräften, die im Betrieb der Elektromaschine auf die Oberflächenmagnete einwirken. Um Defekte und Ausfälle zu vermeiden, kommt neben der mechanischen Festigkeit der Oberflächenmagnete daher auch ihrer Befestigung auf dem Grundkörper eine wichtige Rolle zu.

Aus der DE 11 2016 0004 207 T5 ist ein Rotor für eine elektrische Maschine bekannt, der einen Rotorkern, eine Mehrzahl von Permanentmagneten, ein leitfähiges Element und ein Halteelement aufweist. Die Permanentmagnete sind an einem äußeren peripheren Bereich des Rotorkerns ausgebildet und über Pollücken zueinander beabstandet in Umfangsrichtung angeordnet. Das leitfähige Element weist eine Leitfähigkeit auf, die höher als die Leitfähigkeit der Permanentmagnete ist. Es umgibt den Rotorkern und die Mehrzahl von Permanentmagneten als Ganzes und weist erste und zweite gegenüberliegende Bereiche auf, die einander über einen Spalt in Umfangsrichtung gegenüberliegen. Das Halteelement umgibt schließlich den Rotorkern, die Mehrzahl von Permanentmagneten und das leitfähige Element als Ganzes.

Es ist Aufgabe der Erfindung, einen bürstenlose Elektromaschine bereitzustellen, deren auf dem Außenumfang des Rotors angeordnete Permanentmagnete mit einer gegenüber dem Stand der Technik verbesserten Armierung gehalten werden, die den magnetischen Fluss zwischen Stator und Rotor möglichst wenig beeinflusst.

### Vorteile der Erfindung

Zur Lösung der gestellten Aufgabe ist vorgesehen, dass die Permanentmagnete des Rotors mittels einer sie radial umgebenden, dünnwandigen Armierung fixiert sind, wobei die Armierung ein Elastizitätsmodul mit mindestens 150 GPa (Giga-Pascal) und/oder eine Streckgrenze von mindestens 600 MPa (Mega-Pascal) aufweist. Mit besonderem Vorteil können dadurch einerseits die Permanentmagnete auch bei sehr hohen Drehzahlen der bürstenlosen Elektromaschine von mehr als 20.000 rpm (rotations per minute) sicher fixiert werden, während andererseits der magnetische Spalt zwischen Rotor und Stator zur Steigerung der Effizienz der Elektromaschine möglichst klein gehalten werden kann. Ein hohes Elastizitätsmodul bewirkt trotz einer geringen Wandstärke der Armierung eine sehr geringe Verformung. Eine hohe Streckgrenze hat den Vorteil, dass sich auch bei Kurzzeittests mit doppelter maximaler Drehzahl des Rotors eine plastische Verformung am Außenumfang der Armierung vermeiden lässt.

Weiterhin betrifft die Erfindung ein elektromotorisch angetriebenes Bearbeitungsgerät, insbesondere eine Elektrohandwerkzeugmaschine, mit der erfindungsgemäßen, bürstenlosen Elektromaschine. Als elektromotorisch angetriebenes Bearbeitungsgerät im Kontext der Erfindung sollen unter anderem akku- und/oder netzbetriebene Werkzeugmaschinen zur Bearbeitung von Werkstücken mittels eines von einem bürstenlosen Elektromotor angetriebenen Einsatzwerkzeugs verstanden werden. Dabei kann das elektrische Bearbeitungsgerät sowohl als Handwerkzeugmaschine als auch als stationäre Werkzeugmaschine ausgebildet sein. Typische Werkzeugmaschinen sind in diesem Zusammenhang Hand- oder Standbohrmaschinen, Schrauber, Schlagbohrmaschinen, Hobel, Winkelschleifer, Schwingschleifer, Poliermaschinen oder dergleichen. Als Elektrogeräte kommen aber auch entsprechend angetriebene Garten- und Baugeräte wie Rasenmäher, Rasentrimmer, Astsägen, Motor- und Grabenfräsen, Gebläse, Roboter-Breaker und -Bagger oder dergleichen in Frage. Weiterhin ist die Erfindung auf bürstenlose Elektromotoren von Haushaltgeräten, wie Staubsauger, Mixer, etc. anwendbar.

In einer weiteren Ausgestaltung ist vorgesehen, dass die Armierung aus einem paramagnetischen Metall, insbesondere Aluminium, Messing, Edelstahl oder dergleichen besteht. Alternativ kann die Armierung auch aus einem Kunststoff mit einer Permeabilitätszahl von maximal 15, insbesondere von maximal 2, oder aus einem aus dem Kunststoff und dem paramagnetischen Metall gebildeten Verbundwerkstoff bestehen. Unter paramagnetischen Metallen sollen Metalle verstanden werden, deren Permeabilitätszahl größer 1 ist, die nicht stark von einem Magneten angezogen werden und die selbst nicht magnetisierbar sind. Paramagnetische Metalle unterscheiden sich somit deutlich in ihren magnetischen Eigenschaften von ferromagnetischen Metallen, wie z.B. Eisen, und diamagnetischen Metallen, wie z.B. Kupfer. Es sei an dieser Stelle darauf hingewiesen, dass für paramagnetische bzw. nicht ferromagnetische Materialen gelegentlich auch der Begriff amagnetisch verwendet wird. Streng betrachtet gibt es aber keine amagnetischen Materialen, da jedes Material ab einer gewissen Intensität des Magnetfelds, dem sie ausgesetzt sind, magnetisch reagiert. Mit besonderem Vorteil verhindert eine aus einem paramagnetischen Metalle und/oder einem Kunststoff mit einer geringen Permeabilitätszahl bestehende Armierung einen teilweisen oder vollkommenen Kurzschluss des magnetischen Kreises der bürstenlosen Elektromaschine.

Die Armierung ist als zumindest eine hohlzylinderförmige Hülse ausgebildet, die kraftschlüssig mittels einer Längspressverbindung mit den Permanentmagneten verbunden ist. Dies ermöglicht eine besonders einfache Herstellung der bürstenlosen Elektromaschine, da die zumindest eine Hülse für die Längspressverbindung auf die Permanentmagnete des Rotors entlang einer Längsachse der Maschinenwelle aufgeschoben werden kann. Dabei wird die zumindest eine Hülse während der Längspressverbindung durch eine Aufweitung ihres Innendurchmessers plastisch irreversibel verformt.

Die zumindest eine Hülse kann mit einer Naht versehen sein, die im Wesentlichen senkrecht zur Längsachse der Maschinenwelle der bürstenlosen Gleichstrommaschine verläuft. Im Unterschied zu einer nahtlosen Hülse erlaubt eine Naht einen einfacheren Fertigungsprozess der Hülse. Ebenso kann die Armierung aus einer Mehrzahl von Hülsen bestehen, die auf die Permanentmagnete aufgeschoben werden. Dabei können die einzelnen Hülsen der Armierung nacheinander aus einer Richtung oder, insbesondere im Fall einer geraden Anzahl von Hülsen, paarweise aus beiden Richtungen entlang der Längsachse der Maschinenwelle auf die auf dem Rotor montierten Permanentmagnete aufgeschoben werden.

Ein vereinfachtes Aufschieben der zumindest einen Hülse ist in besonders vorteilhafter Weise dadurch möglich, dass diese an einem offenen Ende eine sich gegenüber ihrem Innendurchmesser aufweitende Einführphase aufweist, deren Innendurchmesser größer ist als ein Außendurchmesser des Rotors mit den montierten Permanentmagneten.

### Ausführungsbeispiele

### Zeichnung

Die Erfindung wird im Folgenden anhand der Figuren 1 bis 11 beispielhaft erläutert, wobei gleiche Bezugszeichen in den Figuren auf gleiche Bestandteile mit einer gleichen Funktionsweise hindeuten.

Es zeigen
- Fig. 1:: eine Querschnittsdarstellung einer dreiphasigen, bürstenlosen Elektromaschine nach dem Stand der Technik,
- Fig. 2:: ein Blockschaltbild einer elektronischen Schaltung zur Ansteuerung der als bürstenloser Gleichstrommotor ausgebildeten Elektromaschine nach Figur 1,
- Fig. 3:: ein erstes Ausführungsbeispiel der erfindungsgemäßen bürstenlosen Elektromaschine in einer Schnittdarstellung,
- Fig. 4:: ein zweites Ausführungsbeispiel des Rotors der erfindungsgemäßen bürstenlosen Elektromaschine in einer perspektivischen Ansicht,
- Fig. 5:: einen Schnitt durch die erfindungsgemäße Hülse zur Fixierung der Permanentmagnete des Rotors gemäß Figur 4,
- Fig. 6:: ein drittes Ausführungsbeispiel des Rotors der erfindungsgemäßen bürstenlosen Elektromaschine in einer perspektivischen Ansicht,
- Fig. 7:: ein erstes Ausführungsbeispiel zur Verbindung der erfindungsgemäßen Hülse mit den Permanentmagneten in einer perspektivischen Ansicht,
- Fig. 8:: ein Ausführungsbeispiel eines einzelnen Schweißpunkts gemäß Figur 7 in einer Draufsicht,
- Fig. 9:: ein zweites Ausführungsbeispiel zur Verbindung der erfindungsgemäßen Hülse mit den Permanentmagneten in einer perspektivischen Ansicht,
- Fig. 10:: ein drittes Ausführungsbeispiel zur Verbindung der erfindungsgemäßen Hülse mit den Permanentmagneten in einer perspektivischen Ansicht und
- Fig. 11:: ein viertes Ausführungsbeispiel zur Verbindung der erfindungsgemäßen Hülse mit den Permanentmagneten in einer perspektivischen Ansicht.

### Beschreibung der Ausführungsbeispiele

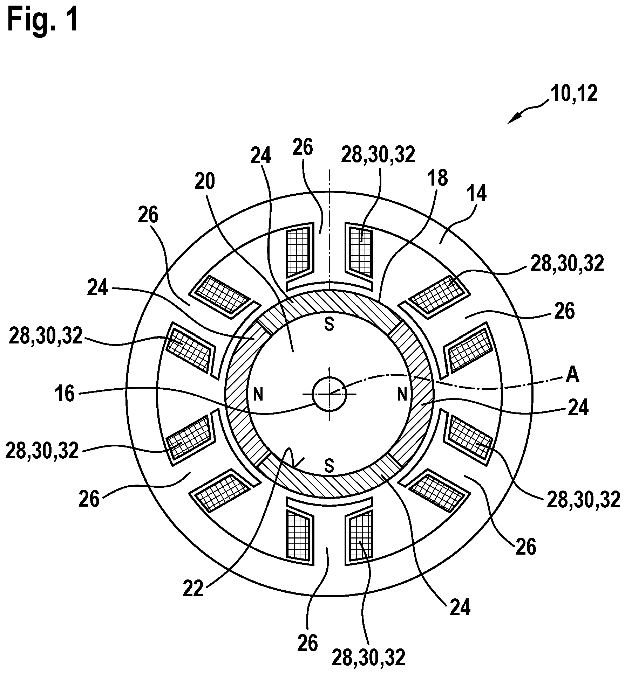

Figur 1 zeigt einen Querschnitt durch eine bürstenlose Elektromaschine 10 nach dem Stand der Technik, die als ein dreiphasiger, bürstenloser Gleichstrommotor (BLDC- bzw. EC-Motor) 12 mit einem Stator 14 und einem drehfest auf einer Maschinenwelle 16 angeordneten Rotor 18 ausgestaltet ist. Der bürstenlose Gleichstrommotor 12 dient zum Antrieb eines nicht näher gezeigten Bearbeitungsgeräts, wie einem Staubsauger, einer Werkzeugmaschine oder dergleichen. Statt eines BLDC- bzw. EC-Motors 12 kann auch ein Wechselstrommotor (AC-Motor), beispielweise in Gestalt eines Asynchron- oder Synchronmotors, in Frage kommen. Der Rotor 18 des bürstenlosen Gleichstrommotors 12 umfasst einen zylinderförmiger Grundkörper 20, der an seinem Außenumfang 22 eine Mehrzahl von als Oberflächenmagnete ausgebildeten Permanentmagneten 24 aufweist, die sich in ihrer Polarität N, S in Umfangsrichtung des Rotors 18 abwechseln. Im Ausführungsbeispiel sind vier Permanentmagnete 24 dargestellt, die ihrerseits zwei Rotorpolpaare bilden. Es ist aber auch eine hiervon abweichende Anzahl von Permanentmagneten 24 denkbar. Der Stator 14 weist sechs radial nach innen gerichtete Statorzähne 26 auf, die ihrerseits jeweils eine Einzelzahnwicklung 28 tragen, wobei jeweils zwei gegenüberliegende Einzelzahnwicklungen 28 einen Wicklungsstrang 30 einer dreiphasigen Statorwicklung 32 bilden. Der Stator 14 definiert mit seinen Statorzähnen 26 einen zylinderförmigen Hohlraum, in dem der Rotor 18 relativ zum Stator 14 mittels der Maschinenwelle 16 drehbeweglich angeordnet ist. Die Wicklungsstränge 30 erzeugen bei Stromdurchfluss ein drehendes magnetisches Feld, welches den permanenterregten Rotor 18 und die Maschinenwelle 16 in eine Drehbewegung versetzen. Es sei vorsorglich darauf hingewiesen, dass die nachfolgende Erfindung nicht nur auf eine als Elektromotor ausgebildete bürstenlose Elektromaschine 10 anwendbar ist. Ebenso kann die bürstenlose Elektromaschine 10 auch als ein entsprechend aufgebauter Generator ausgebildet sein. Nachfolgend soll die Erfindung aber nur anhand des bürstenlosen Gleichstrommotors 12 beschrieben werden.

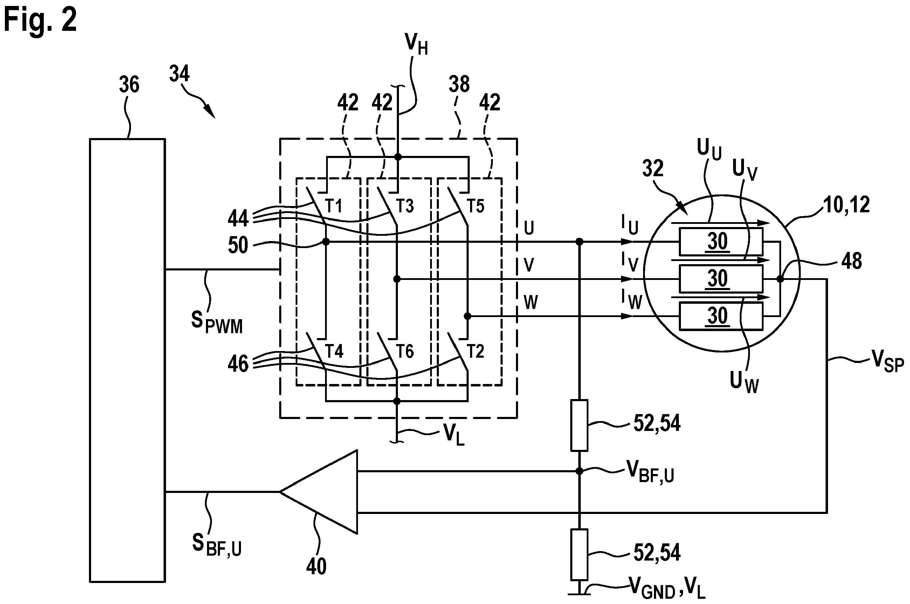

In Figur 2 ist eine Vorrichtung 34 zur Steuerung des bürstenlosen Gleichstrommotors 12 gemäß Figur 1 gezeigt. Die Vorrichtung 34 umfasst neben dem bürstenlosen Gleichstrommotor 12 eine Steuer- oder Regeleinheit 36, eine Treiberschaltung 38 und einen Komparator 40. Der Übersichtlichkeit halber sind nur die wichtigsten Bauteile und Baugruppen der Vorrichtung 34 gezeigt. Die Steuer- oder Regeleinheit 36 kann als ein Mikroprozessor (µP), ein digitaler Signalprozessor (DSP), eine anwendungsspezifische integrierte Schaltung (ASIC) oder dergleichen ausgebildet sein. Ebenso ist denkbar, dass die Steuer- oder Regeleinheit 36 zumindest teilweise aus diskreten Halbleiterbauelementen besteht. Die Treiberschaltung 38 ist als ein Wechselrichter in Form einer B6-Brückenschaltung ausgebildet und weist je Phasen- bzw. Wicklungsstrang 30 der drei Phasen U, V, W der Statorwicklung 32 eine als Inverter-Schaltung ausgebildete Halbbrücke 42 auf. Jede Halbrücke 42 besteht aus einem ersten Leistungsschalter 44, der mit einem hohen Versorgungspotenzial V_{H} (High Side) verbunden ist, und einem zweiten Leistungsschalter 46, der mit einem niedrigen Versorgungspotenzial V_{L} (Low Side) verbunden ist. Die Leistungsschalter 44, 46 können als Halbleiterschalter in Form von IGBT, IGCT, Thyristoren, Leistungs-MOSFETs oder dergleichen aber auch als Relais ausgebildet sein. Die Steuer- oder Regeleinheit 36 steuert die einzelnen Leistungsschalter 44, 46 zur Bestromung von jeweils zwei Wicklungssträngen 30 mittels eines pulsweitenmodulierten Signals bzw. einer Mehrzahl pulsweitenmodulierter Signale S_{PWM} (beides soll hier als Synonym verwendet werden) derart an, dass der erste Leistungsschalter 44 einer der drei Halbbrücken 42 geschlossen ist (z.B. T1), während die ersten Leistungsschalter 44 der beiden anderen Halbbrücken 42 geöffnet sind (z.B. T3 und T5), und dass zumindest der zweite Leistungsschalter 46 einer der beiden anderen Halbbrücken 42 geschlossen ist (z.B. T2), während der zweite Leistungsschalter 46 zumindest derjenigen Halbbrücke 42 geöffnet ist (z.B. T4), deren erster Leistungsschalter 44 (z.B. T1) geschlossen ist. Auf diese Weise können zur Erzeugung des magnetischen Drehfelds im Wechsel die ersten Leistungsschalter 44 und die zweiten Leistungsschalter 46 derart geschaltet werden, dass vier der sechs Einzelzahnwicklungen 28 der Wicklungsstränge 30 bestromt sind, so dass während des Betriebs die resultierende Statordurchflutung im Mittel senkrecht zur Rotordurchflutung orientiert ist. Zudem ist zur Vermeidung von Kurzschlüssen sichergestellt, dass niemals beide Leistungsschalter 44, 46 derselben Halbbrücke 42 gleichzeitig geschlossen sind (z.B. T1 und T4). Dazu werden die Leistungsschalter 44, 46 derselben Halbbrücke 42 immer mit einer gewissen Totzeit nach dem Öffnen des jeweils anderen Leistungsschalters 44, 46 mittels des pulsweitenmodulierten Signals S_{PWM} geschlossen. Dem Fachmann ist diese Art der Beschaltung bekannt, so dass hierauf nicht weiter eingegangen werden soll. Statt einer Mehrzahl von B6-Halbbrücken können auch H-Brücken oder vergleichbare Inverter-Schaltungen zur Ansteuerung der einzelnen Phasen U, V, W des bürstenlosen Gleichstrommotors 12 zum Einsatz kommen.

Um die genauen Umschaltzeitpunkte für die einzelnen Leistungsschalter 44, 46 der Treiberschaltung 38 bestimmen zu können, muss der Steuer- oder Regeleinheit 36 die Lage des Rotors 18 bekannt sein. Die Ermittlung der Rotorlage kann dazu beispielsweise mittels Sensoren, z.B. Hall-Sensoren, die über den Umfang des Rotors 18 am Stator 14 angeordnet sind, erfolgen. Statt einer sensorbehafteten Ermittlung der Rotorlage ist es jedoch häufig vorteilhaft, diese in Verbindung mit einer elektrischen Kommutierung sensorlos über die Back-EMF zu ermitteln, da hieraus in der Regel geringere Kosten durch den Entfall der Sensoren sowie eine größere Zuverlässigkeit in Verbindung mit einer kompakteren Bauweise des bürstenlosen Elektromaschine 10 resultieren. Bei der Nutzung der Back-EMF wird der Verlauf einer in einen stromlosen Wicklungsstrang 28 durch die Permanentmagnete 24 des Rotors 18 induzierten Spannung detektiert. Dazu wird nach dem Stand der Technik zunächst der Nulldurchgang eines Strangstroms lu, Iv, Iw einer der Phasen U, V, W prädiziert und die Bestromung des entsprechenden Wicklungsstrangs 30 für eine vorgegeben Zeitspanne, in der der prädizierte Nulldurchgang liegt, mittels des pulsweitenmodulierten Signals S_{PWM} unterbrochen. Nach dem Abschalten der Strangspannung Uu, Uv, Uw der betreffenden Phase U, V, W fließt der zugehörige Strangstrom lu, Iv, Iw über ein nicht gezeigtes Freilaufelement, das dem ausgeschalteten Leistungsschalter 44, 46 parallelgeschaltet ist. Im Falle eines MOSFETs ist das Freilaufelement beispielsweise durch seine intrinsische Freilaufdiode realisiert. Da die Freilaufdiode nur in eine Richtung leitend ist, kommt es zu einem sprunghaften Anstieg der Spannung, sobald der Strangstrom I_{U}, I_{V}, I_{W} durch den betreffenden Wicklungsstrang 30 den Wert null erreicht. Somit kann der Nulldurchgang des Strangstroms lu, Iv, Iw nach dem Abschalten der Strangspannung U_{U}, U_{V}, U_{W} bestimmt und die Phasenverschiebung zwischen Strangstrom I_{U}, I_{V}, I_{W} und Back-EMF zur Erfassung der Lage des Rotors 18 berechnet werden.

Im gezeigten Ausführungsbeispiel gemäß Figur 2 wird nur die Phase U für die Erfassung der Rotorlage herangezogen. Der Komparator 40 bildet dazu eine arithmetische Differenz U_{Diff} zwischen einem an einem ersten Eingang anliegenden Potential V_{SP} eines gemeinsamen Sternpunkts 48 der Wicklungsstränge 30 des bürstenlosen Gleichstrommotors 12 und eines an einem zweiten Eingang anliegenden Potentials V_{BF,U} eines Knotenpunkts 50 zur Bestromung des jeweiligen Wicklungsstrangs 30 der Phase U. Zur Bestimmung des Potentials V_{BF,U} der in den unbestromten Wicklungsstrang 30 induzierten Spannung wird ein aus zumindest zwei Widerständen 52 gebildeter Spannungsteiler 54 verwendet, der einerseits mit dem Knotenpunkt 50 verbunden ist und andererseits auf einem Bezugspotential V_{GND}, dem niedrigen Versorgungspotenzial V_{L} oder einem vergleichbaren Referenzpotential liegt. Die arithmetische Differenz U_{Diff} wird dann als digitalisiertes Back-EMF-Signal S_{BF,U} vom Komparator 40 an die Steuer- oder Regeleinheit 36 übergeben.

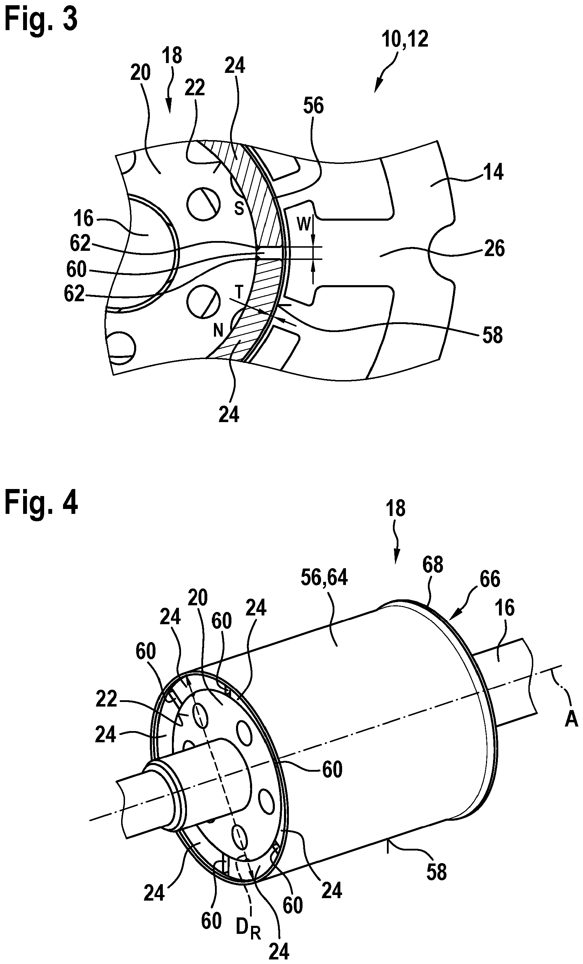

Figur 3 zeigt die Erfindung anhand eines Schnitts durch den bürstenlosen Gleichstrommotors 12 quer zur Längsachse Ader Maschinenwelle 16. Entsprechend Figur 1 trägt der mit der Maschinenwelle 16 drehfest verbundene Grundkörper 20 des Rotors 18 an seinem Außenumfang 22 die Permanentmagnete 24 mit abwechselnden Polaritäten N, S. Die Permanentmagnete 24 sind zum einen stoff-, form- und/oder kraftschlüssig mit dem Grundkörper 20 verbunden und zum anderen mittels einer sie radial umgebenden, dünnwandigen Armierung 56 fixiert. Damit die Permanentmagnete 24 auch bei sehr hohen Drehzahlen des bürstenlosen Gleichstrommotors 12 von mehr als 20.000 rpm sicher fixiert sind und zudem der magnetische Spalt zwischen Rotor 18 und Stator 14 zur Erhaltung bzw. Steigerung der Effizienz möglichst klein gehalten werden kann, weist die Armierung 56 ein Elastizitätsmodul mit mindestens 150 GPa und/oder eine Streckgrenze von mindestens 600 MPa auf. Dabei kann durch ein hohes Elastizitätsmodul trotz der geringen Wandstärke eine sehr geringe Verformung bewirkt werden, während sich durch eine hohe Streckgrenze eine ungewollte, plastische Verformung an einem Außenumfang 58 der Armierung 56 vermeiden lässt.

Um einen teilweisen oder vollkommenen Kurzschluss des magnetischen Kreises des bürstenlosen Elektromotors 12 zu verhindern, besteht die Armierung 56 aus einem paramagnetischen Metall, insbesondere aus Aluminium, Messing, Edelstahl oder dergleichen. Alternativ kann die Armierung 56 aber auch aus einem Kunststoff mit einer Permeabilitätszahl µᵣ von maximal 15, insbesondere von maximal 2, oder aus einem aus dem Kunststoff und dem paramagnetischen Metall gebildeten Verbundwerkstoff bestehen.

Zwischen zwei benachbarten, auf dem Grundkörper 20 des Rotors 18 montierten Permanentmagneten 24 ist jeweils eine Pollücke 60 vorgesehen. Zur form- oder kraftschlüssigen Befestigung der Permanentmagnete 24 weist der Grundkörper 20 des Rotors 18 über seinen Außenumfang 22 verteilt Vorsprünge 62 auf, mittels derer die vorzugsweise noch unmagnetisierten Permanentmagnete 24 mit den definierten Pollücken 60 positionierbar sind. Diese Vorsprünge 58 können beispielsweise als Noppen, Stege oder dergleichen auf dem Grundkörper 20 ausgebildet sein. Alternativ oder ergänzend können die Permanentmagnete 24 auch stoffschlüssig, beispielsweise mittels einer Verklebung, mit dem Grundkörper 20 verbunden sein. Die Pollücken 60 erlauben sowohl eine Optimierung hinsichtlich der Leistungsdichte des bürstenlosen Gleichstrommotors 12 als auch hinsichtlich der Ausnutzung des verwendeten Magnetmaterials der Permanentmagnete 24. So kann je nach Bedarf auf einfache Weise ein Kompromiss zwischen den Kosten und der Effizienz des bürstenlosen Gleichstrommotors 12 erzielt werden, indem die Pollücken 60 einerseits möglichst klein gehalten werden, um die Leistungsdichte des bürstenlosen Gleichstrommotors 12 nicht oder nur minimal zu verringern, und andererseits so groß gestaltet werden, dass das eingesetzte Magnetmaterial bestmöglich ausnutzbar ist. Dazu beträgt das Verhältnis zwischen einer Breite W der Pollücke 60 in Umfangsrichtung und einem Außendurchmesser D_{R} des mit den Permanentmagneten 24 versehenen Rotors 18 (vgl. hierzu Figur 4) vorzugsweise weniger als 10 %. Unter einer dünnwandigen Armierung 56 soll in diesem Zusammenhang vorzugsweise verstanden werden, dass eine Dicke T der Armierung 56 weniger als 2 % ihres Innendurchmessers D_{I} beträgt.

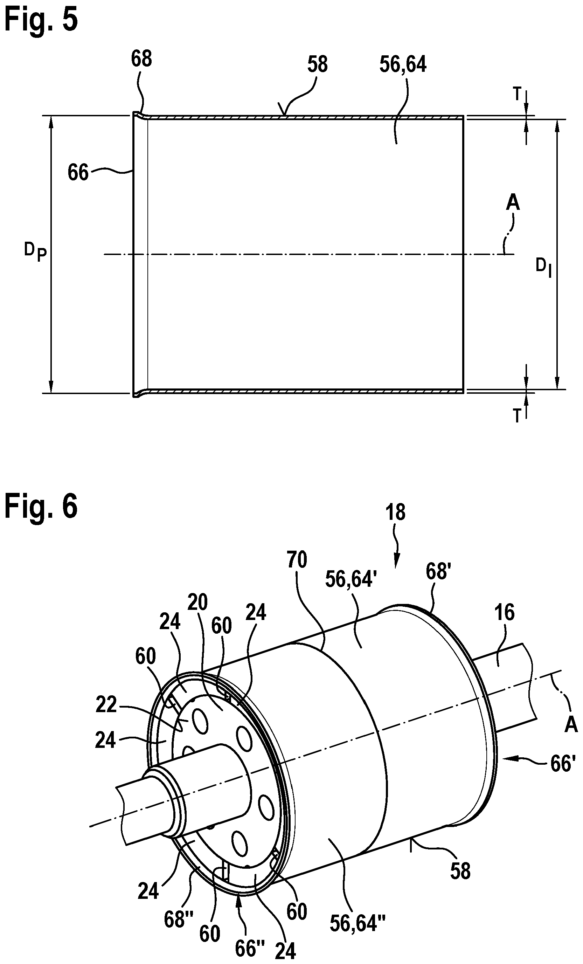

Zur Herstellung des erfindungsgemäßen, bürstenlosen Gleichstrommotors 12 wird in einem ersten Verfahrensschritt eine Mehrzahl von zunächst unmagnetisierten oder schwach magnetisierten Permanentmagneten 24 auf dem Außenumfang 22 des Grundkörpers 20 des Rotors 18 insbesondere mittels einer nicht näher gezeigten Montagevorrichtung derart montiert, dass zwischen zwei benachbarten Permanentmagneten 24 jeweils eine Pollücke 60 verbleibt. Dabei können die Permanentmagnete 24 in der oben beschriebenen Art und Weise stoff-, form- und/oder kraftschlüssiges auf dem Grundkörper befestigt werden. In einem nachfolgenden Verfahrensschritt wird die Armierung 56 auf die Permanentmagnete 24 des Rotors 18 in Richtung der Längsachse A der Maschinenwelle 16 aufgeschoben. Auch dies kann vorzugsweise durch die Montagevorrichtung automatisiert erfolgen. Im Zuge des Aufschiebvorgangs wird die Armierung 56 mit den Permanentmagneten 24 über eine kraftschlüssige Längspressverbindung derart verbunden, dass die Armierung 56 durch eine Aufweitung ihres Innendurchmessers D_{I} (vgl. Figur 5) plastisch irreversibel verformt wird. Vor dem Einsetzen des Rotors 18 in den Stator 14 erfolgt in einem weiteren Verfahrensschritt eine Magnetisierung der Permanentmagnete 56 mittels zumindest einer Magnetisierungsspule der Montagevorrichtung.

Durch die Pollücken 60 zwischen zwei jeweils benachbarten Permanentmagneten 24 ergibt sich der Vorteil einer einfachen, nachträglichen und vor allen Dingen vollständigen Aufmagnetisierung der zunächst unmagnetisierten oder schwach magnetisierten Permanentmagnete 24. Eine vollständige Magnetisierung bewirkt die Erzielung eines deutlich höherer magnetischen Flusses, so dass die Permanentmagnete 24 auch in ihren Randbereichen einen nennenswerten Beitrag zur Drehmomenterzeugung des bürstenlosen Gleichstrommotors 12 liefern. Darüber hinaus lassen sich die unmagnetisierten oder schwach magnetisierten Permanentmagnete 24 leichter und präziser über den Außenumfang 22 des Grundkörpers 20 des Rotors 18 positionieren, da von ihnen keine oder zumindest nur eine geringe magnetische Anziehung ausgeht.

Figur 4 zeigt ein weiteres Ausführungsbeispiel des Rotors 18 in einer perspektivischen Ansicht. Die Armierung 56 ist als eine hohlzylinderförmige Hülse 64 ausgebildet, die kraftschlüssig mittels einer Längspressverbindung mit den Permanentmagneten 24 des Rotors 18 verbunden ist. Dabei wird die Hülse 64 während der Längspressverbindung durch eine Aufweitung ihres Innendurchmessers D_{I} plastisch irreversibel verformt. Während die Armierung 56 gemäß Figur 3 beispielsweise auch als ein Ring ausgebildet sein kann, der sich nur über die einen Teil der Länge des Grundkörpers 20 des Rotors 18 erstreckt, ummantelt die Hülse 64 die Permanentmagnete 24 vollständig. Die Hülse 64 erstreckt sich somit in Richtung der Längsachse Ader Maschinenwelle 16 über die gesamte Länge des Grundkörpers 20 des Rotors 18. An einem offenen Ende 66 weist die Hülse 64 eine sich gegenüber ihrem Innendurchmesser D_{I} aufweitende Einführphase 68 auf, deren Innendurchmesser D_{P} größer ist als ein Außendurchmesser D_{R} des Rotors 18 mit den montierten Permanentmagneten 24. Somit kann ein vereinfachtes Aufschieben der Hülse 64 entlang der Längsachse Ader Maschinenwelle 16 ermöglicht werden.

Zur Verdeutlichung ist die noch nicht auf den Rotor 18 aufgeschobene, dünnwandige Hülse 64 der Dicke T in Figur 5 in einem Schnitt entlang der Längsachse A gezeigt. Dabei ist zu erkennen, dass der Innendurchmesser D_{P} der Einführphase 68 am offenen Ende 66 der Hülse 64 größer ist als der Innendurchmesser D_{I} ihres hohlzylinderförmig ausgebildeten Teils. Zur Erzielung des Längspressverbindung während des Aufschiebens der Hülse 64 muss der Innendurchmesser D_{I} ihres hohlzylinderförmig ausgebildeten Teils im nicht aufgeschobenen Zustand kleiner sein als der Außendurchmesser D_{R} des mit den Permanentmagneten 24 versehenen Grundkörpers 20 des Rotors 18. Somit gilt im ummontierten Zustand der Hülse 64 der Zusammenhang D_{P} > D_{R} > D_{I}. Zudem kann durch eine entsprechend hohe Streckgrenze der Hülse 64 von mindestens 600 MPa eine ungewollte plastische Verformung an ihrem Außenumfang 58 während des Betriebs des bürstenlosen Gleichstrommotors 12 vermieden werden. Dies ermöglicht zum einen einen sehr geringen magnetischen Spalt zwischen Rotor 18 und Stator 14 ohne das Risiko einer mechanischen Berührung und sichert zum anderen den Rundlauf des Rotors 18 auch bei sehr hohen Drehzahlen.

Figur 6 zeigt eine weitere Ausgestaltungsform der Erfindung, wobei die Armierung 56 aus zwei Hülsen 64`, 64" gebildet ist, die mittels einer im Wesentlichen senkrecht zur Längsachse Ader Maschinenwelle 16 verlaufenden Naht 70 zusammengefügt sind. Im Unterschied zu der nahtlosen Hülse 64 gemäß der Figuren 4 und 5 erlaubt die Naht 70 einen einfacheren Fertigungs- und Montageprozess der Hülsen 64`, 64" insbesondere bei einem besonders lang ausgedehnten Grundkörper 20 des Rotors 18. Dabei können die Hülsen 64`, 64" derart vor dem Aufschieben auf die Permanentmagnete 24 mittels der Naht 70 stoffschlüssig verbunden, insbesondere verschweißt, werden, dass sie nach dem Verbinden an ihren offenen Enden 66`, 66" jeweils eine Einführphase 68`, 68" aufweisen. Alternativ ist es auch denkbar, dass die einzelnen Hülsen 64`, 64" der Armierung 56 nacheinander aus einer Richtung oder, insbesondere im Fall einer geraden Anzahl von Hülsen 64, paarweise aus beiden Richtungen entlang der Längsachse A der Maschinenwelle 16 auf die auf dem Grundkörper 20 des Rotors 18 montierten Permanentmagnete 24 aufgeschoben und im Anschluss daran mittels der Naht 70 stoffschlüssig verbunden werden. Bestehen die Hülsen 64`, 64" aus einem Kunststoff oder einem Verbundwerkstoff, so kann die sie verbindende Naht 70 auch mittels Laserschweißen oder dergleichen hergestellt sein. Ebenso ist eine Verklebung der Naht 70 denkbar.

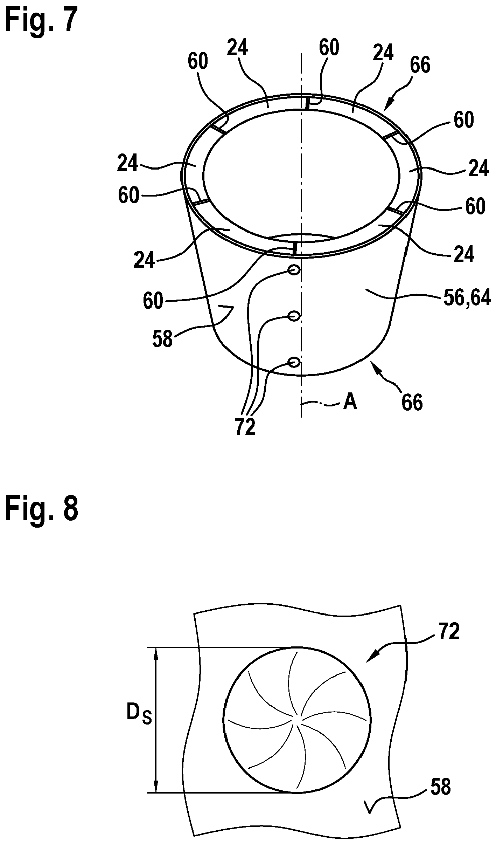

Figur 7 zeigt ein erstes Ausführungsbeispiel zur Verbindung der als Hülse 64 ausgebildeten Armierung 56 mit den Permanentmagneten 24 in einer perspektivischen Ansicht. Zur Veranschaulichung wurde auf die Darstellung des Grundkörpers 20 sowie der Maschinenwelle 16 des Rotors 18 verzichtet. Es sei jedoch angemerkt, dass die Permanentmagnete 24 - wie weiter oben beschreiben - bereits vor dem Aufschieben der Hülse 64 auf dem Grundkörper 20 des Rotors 18 unter Einhaltung der zwischen ihnen vorgesehenen Pollücken 60 montiert sind. Die insbesondere aus einem paramagnetischen Metall bestehende Hülse 64 ist über eine Mehrzahl von Schweißpunkten 72 mit den Permanentmagneten 24 stoff- und/oder formschlüssig verbunden. Die Schweißpunkte 72 können in besonders vorteilhafter Weise nach dem Aufschieben der Hülse 64 auf die Permanentmagnete 24 automatisch mit einer entsprechenden, aber nicht näher gezeigten Schweißvorrichtung, insbesondere einem Laser, der Montagvorrichtung gesetzt werden. Ebenso ist ein manuelles Setzen der Schweißpunkte 72 denkbar. Dadurch kann der bürstenlose Gleichstrommotor 12 im Allgemeinen und dessen Rotor 18 im Besonderen effizient und kostengünstig gegen Beschädigungen, beispielsweise durch eine Deformation und/oder ein axiales Verschieben der Hülse 64 entlang der Längsachse Ader Maschinenwelle 16, auch bei sehr hohen Drehzahlen von mehr als 20.000 rpm sowie bei Schlägen, Stürzen oder dergleichen geschützt werden.

In Abhängigkeit von Betriebsparametern des bürstenlosen Gleichstrommotors 12 und/oder der Hülse 64 kann die Anzahl, Form und Verteilung der Schweißpunkte variieren. Die Anzahl der Schweißpunkte 72 sollte beispielsweise zur sicheren Fixierung der Hülse 64 einerseits so groß wie möglich bzw. so gering wie nötig, andererseits aber zur Vermeidung der Beeinträchtigung des magnetischen Flusses zwischen Rotor 18 und Stator 14 auch so gering wie möglich bzw. so groß wie nötig sein. Gemäß Figur 7 sind im Bereich der Pollücken 60 jeweils drei Schweißpunkte 72 entlang der Längsachse A vorgesehen - zwei der Schweißpunkte 72 in der Nähe der offenen Enden 66 und ein dritter im Wesentlichen auf halber Länge der Hülse 64. Im Falle einer längeren oder kürzeren Hülse 64 können entsprechend mehr oder weniger Schweißpunkte 72 vorgesehen sein. Auch ist es je nach Außendurchmesser D_{R} des Rotors 18 und Anzahl der Permanentmagnete 24 bzw. Pollücken 60 möglich, die Schweißpunkte 72 nicht in der Nähe jeder Pollücke 60 vorzusehen, sondern einzelne Pollücke 60 auszusparen. Es ist jedoch vorteilhaft, wenn die Anzahl der Schweißpunkte 72 je Permanentmagnet 24 in einem Bereich von 1 bis 10, insbesondere von 2 bis 4, liegt, wobei dies - wie erwähnt - maßgeblich von den Abmessungen des Rotors 18 sowie der Anzahl, Größe und Form der Permanentmagnete 24 abhängt.

Figur 8 zeigt einen einzelnen Schweißpunkt 72 in einer Draufsicht. Neben einer stoffschlüssigen Verbindung kann mittels des Lasers auch eine formschlüssige Verbindung derart erzeugt werden, dass kurzzeitig ein Fokuspunkt stark erhitzt wird, so dass eine Schmelzsäule entsteht, die Teile der Hülse 64 und des Permanentmagneten 24 aufweichen bzw. verflüssigen. Nach Erstarrung der Schmelzsäule entsteht zwischen der Hülse 64 und dem Permanentmagneten 24 ein Hinterschnitt und/oder ein Vorsprung, die den Formschluss bewirken. Neben der Optimierung der Anzahl der Schweißpunkte 72 kann alternativ oder ergänzend auch ihre Größe bzw. Form derart variieren werden, dass sie jeweils einen Durchmesser D_{S} von ca. 0,2 bis 2 mm aufweisen. Sowohl die Hülse 64 als auch die Permanentmagnete 24 müssen für eine stoffschlüssige Verbindung aus entsprechend verschweißbaren Materialien bestehen. Bei der Hülse 64 ist dies insbesondere durch ein paramagnetisches Metall gewährleistet, wobei aber auch Kunststoffe und Verbundwerkstoffe existieren, die sich für eine Verschweißung mit den Permanentmagneten 24 eignen. Das Material der Permanentmagnete 24 sollte vorzugsweise gesintert bzw. heißgepresst sein. Doch auch hier sind kunststoffgebundene Permanentmagnete 24 nutzbar. Entsprechendes gilt für etwaige Beschichtungen und Coatings von Hülsen 64 und Permanentmagneten 24. Über die Anzahl, Form und Verteilung der Schweißpunkte 72 lässt sich unter anderem in Grenzen auch eine etwaige Unwucht des Rotors 18 ausgleichen, so dass die Schweißpunkte 72 nicht zwangsläufig symmetrisch über den Außenumfang 58 der Hülse 64 verteilt angeordnet sein müssen.

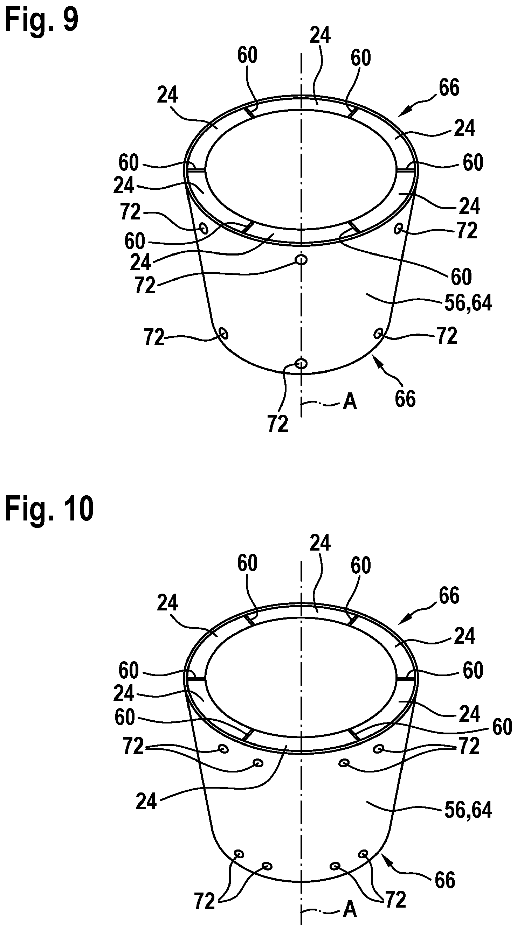

In Figur 9 ist ein zweites Ausführungsbeispiel zur stoff- und/oder formschlüssigen Verbindung der Hülse 64 und der Permanentmagnete 24 mittels einer Mehrzahl von Schweißpunkten 72 in einer perspektivischen Ansicht gezeigt. Im Unterschied zu Figur 8 sind jeweils zwei Schweißpunkte 72 entlang der Längsachse A im Wesentlichen in Umfangsrichtung der Hülse 64 mittig über den einzelnen Permanentmagneten 24 angeordnet. Dabei befinden sich die Schweißpunkte 72 in der Nähe der beiden offenen Enden 66 der Hülse 64. Es ist aber auch denkbar, dass entlang der Längsachse A in Abhängigkeit von der Länge der Hülse 64 noch mehr Schweißpunkte angeordnet sein können. Ebenso ist es denkbar, dass bei einem kleineren Außendurchmesser D_{R} des Rotors 18 nicht jeder Permanentmagnet 24 mit der Hülse 64 form- und/oder kraftschlüssig über die Schweißpunkte 72 verbunden ist.

Ein drittes Ausführungsbeispiel zur Verbindung der Hülse 64 und der Permanentmagnete 24 mittels einer Mehrzahl von Schweißpunkten 72 zeigt Figur 10. Dabei sind je Permanentmagnet 24 vier Schweißpunkte 72 derart vorgesehen, dass sie sich in der Nähe der beiden offenen Enden 66 der Hülse 64 in Randbereichen der Permanentmagnete 24 nahe der Pollücken 60 befinden.

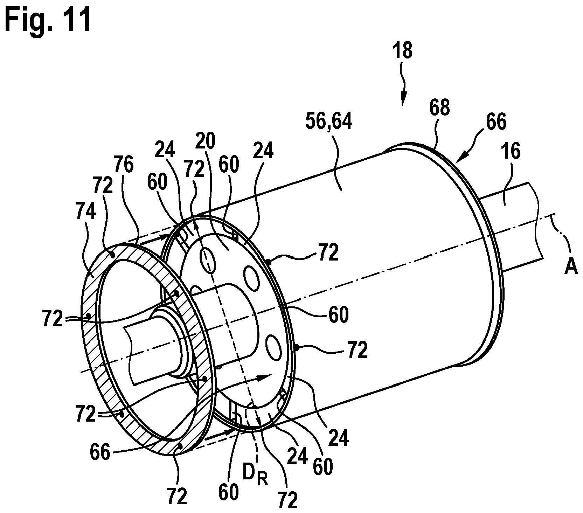

Figur 11 zeigt ein viertes Ausführungsbeispiel zur Verbindung der Hülse 64 und der Permanentmagnete 24. Dabei wird nach dem Aufschieben der Hülse 64 an einem ihrer offenen Enden 66, insbesondere am offenen Ende 66 gegenüber dem offenen Ende 66 mit der Einführphase 68, ein Ring 74 derartig angebracht, dass er stirnseitig mit den Permanentmagneten 24 und an seiner Umlaufkante 76 mit der Hülse 64 über eine Mehrzahl von Schweißpunkten 72 stoffschlüssig verbunden ist. Dabei kann Permanentmagnet 24 ein Schweißpunkt 72 vorgesehen sein. Es sind aber je nach Außendurchmesser D_{R} des Rotors 18 und Anzahl der Permanentmagnete 24 auch mehr oder weniger Schweißpunkte 72 denkbar. Bevorzugt besteht der Ring 74 aus dem gleichen Material wie die Hülse 64. Zudem ist es möglich, an jedem offenen Ende 66 der Hülse 64 einen Ring 74 vorzusehen. Statt eines Rings 74 kann die Hülse 64 auch einzelne Laschen an zumindest einem ihrer offenen Enden 66 aufweisen, die nach dem Aufschieben auf die Permanentmagnete 24 umgebogen und mit dem Permanentmagneten 24 stirnseitig verschweißt werden.

Es sei abschließend darauf hingewiesen, dass die Erfindung nicht auf die in den Figuren 3 bis 11 gezeigten Ausführungsbeispiele beschränkt ist, sondern dass diese exemplarisch zu verstehen sind. So können insbesondere Anzahl, Form und Größe der Permanentmagnete 24 variieren. Auch die in den Figuren gezeigte Größe des Rotors 18 und die Ausgestaltung des Stators 14 der bürstenlosen Gleichstrommotors 12 sind nicht einschränkend zu verstehen. Dies gilt ebenso für den bürstenlosen Gleichstrommotor 12 und die ihn ansteuernde Elektronik, die im Fall einer als Generator ausgebildeten, bürstenlosen Elektromaschine 10 entsprechend anzupassen wäre.

## Patentansprüche

1. Bürstenlose Elektromaschine (10), insbesondere bürstenloser Gleichstrommotor (12), mit einem Stator (14) und einem innerhalb des Stators (14) relativ dazu drehbeweglich angeordneten Rotor (18), wobei der Rotor (18) einen zylinderförmigen Grundkörper (20) aufweist, der drehfest mit einer Maschinenwelle (16) verbunden ist und auf seinem Außenumfang (22) eine Mehrzahl von Permanentmagneten (24) trägt, und wobei der Stator (14) eine Statorwicklung (32) mit einer Mehrzahl von Einzelzahnwicklungen (28) zum Antrieb des Rotors (18) mittels eines elektrisch erzeugten Magnetdrehfelds aufweist, **dadurch gekennzeichnet, dass** die Permanentmagnete (24) des Rotors (18) mittels einer sie radial umgebenden, dünnwandigen Armierung (56) fixiert sind, wobei die Armierung (56) ein Elastizitätsmodul mit mindestens 150 GPa und/oder eine Streckgrenze von mindestens 600 MPa aufweist.

2. Bürstenlose Elektromaschine (10) nach Anspruch 1, **dadurch gekennzeichnet, dass** die Armierung (56) aus einem paramagnetischen Metall, insbesondere Aluminium, Messing, Edelstahl oder dergleichen, besteht.

3. Bürstenlose Elektromaschine (10) nach Anspruch 1, **dadurch gekennzeichnet, dass** die Armierung (56) aus einem Kunststoff mit einer Permeabilitätszahl (µᵣ) von maximal 15, insbesondere von maximal 2, oder aus einem aus dem Kunststoff und einem paramagnetischen Metall, insbesondere Aluminium, Messing, Edelstahl oder dergleichen, gebildeten Verbundwerkstoff besteht.

4. Bürstenlose Elektromaschine (10) nach einem der vorhergehenden Ansprüche, **dadurch gekennzeichnet, dass** die Armierung (56) als zumindest eine hohlzylinderförmige Hülse (64, 64`, 64") ausgebildet ist, die kraftschlüssig mittels einer Längspressverbindung mit den Permanentmagneten (24) verbunden ist.

5. Bürstenlose Elektromaschine (10) nach Anspruch 4, **dadurch gekennzeichnet, dass** die zumindest eine Hülse (64, 64`, 64") eine Naht (70) aufweist, die im Wesentlichen senkrecht zu einer Längsachse (A) der Maschinenwelle (16) der bürstenlosen Gleichstrommaschine (10) verläuft.

6. Bürstenlose Elektromaschine (10) nach einem der vorhergehenden Ansprüche 4 oder 5, **dadurch gekennzeichnet, dass** die zumindest eine Hülse (64, 64`, 64") an einem offenen Ende (66) eine sich gegenüber dem Innendurchmesser (D_{I}) der Hülse (64, 64`, 64") aufweitende Einführphase (68, 68`, 68") aufweist, deren Innendurchmesser (D_{P}) größer ist als ein Außendurchmesser (D_{R}) des Rotors (18) mit den montierten Permanentmagneten (24).

7. Elektromotorisch angetriebenes Bearbeitungsgerät, insbesondere Elektrohandwerkzeugmaschine, mit einer bürstenlosen Elektromaschine (10) nach Anspruch 1.

8. Verfahren zur Herstellung einer bürstenlosen Elektromaschine (10) nach einem der vorhergehenden Ansprüche 1 bis 6, **dadurch gekennzeichnet, dass** die Armierung (56) auf die Permanentmagnete (24) des Rotors (18) in Richtung der Längsachse (A) der Maschinenwelle (16) aufgeschoben und mit den Permanentmagneten (24) mittels einer Längspressverbindung kraftschlüssig verbunden wird.

9. Verfahren nach Anspruch 8, **dadurch gekennzeichnet, dass** die Armierung (56) während der Längspressverbindung durch eine Aufweitung ihres Innendurchmessers (D_{I}) plastisch irreversibel verformt wird.
